# EUROPEAN PATENT APPLICATION

(11) **EP 1 981 220 A1**
(43) Date of publication of application: **15.10.2008**
(21) Application number: 07706964.9
(22) Date of filing: 18.01.2007
(51) Int. Cl.: H04L 12/56, H04L 29/08

(54) **COMMUNICATION METHOD, COMMUNICATION SYSTEM, NODES AND PROGRAM**

(30) Priority: 23.01.2006 JP 2006014458
(71) Applicant: NEC Corporation, Minato-ku Tokyo 108-8001 (JP)
(72) Inventor: NAKATA, Tsuneo, Tokyo 108-8001 (JP)
(74) Representative: Vossius & Partner
(86) International application number: PCT/JP2007/050660
(87) International publication number: WO 2007/083687

(57) **Abstract**

The task of the present invention is to reduce a load caused by a transmission of control information related to data packets and enhance a communication efficiency.

In the present invention, when packets are transferred from a transferring node 101 to a transferring node 102, control information stored in each of data packets 301 is compiled together into a leader packet 302 located in the front position of a packet block 300-1, and then, transmitted from the transferring node 101 to the transferring node 102. When receiving this packet block 300-1, the transferring node 102 controls, based on the received control information in the leader packet, the transmission of the packets to be transferred to the transferring node 101.

## Description

### [TECHNICAL FIELD]

The present invention relates to a packet communication technology and a multiplexed communication technology.

### [BACKGROUND ART]

In packet data communication, digital data contained in a small package called a packet is transferred in a network. A packet includes a body of data to be transferred, and a header containing information for use in transfer control in the network. In a hierarchical network, a header in an upper layer is included in the body of data in a lower layer. In nodes in a network involved in packet data communication, a transfer protocol function for decoding a header of each input packet, editing it as necessary, and transmitting the same data to a next node is implemented. In general, the packet transfer protocol is an asynchronous protocol, in which transfer of different packets in the same network is conducted by any node at any time. Thus, packet transfer can be achieved at any speed as performance of a transmitting node permits.

However, since nodes and/or communication paths in a network operate under respective capabilities and/or loads, if a transfer capability is lower than a transmission speed anywhere on a path from a transmitting node to a receiving node, packets may be delayed or discarded. To avoid this, signaling is made between the transmitting node and receiving node for monitoring the communication status, and the result is fed back into the transmission speed to keep an appropriate transmission speed, which mechanism is generally referred to as flow control.

A representative flow control protocol that is known is TCP, which is a fourth-layer protocol in an OSI seven-layer model (for further information, see Non-patent Document 1). FIG. 16 shows an example of a TCP packet transmitted from a transmitting node to a receiving node, where IP (internet protocol) is used in the third layer. The TCP implements flow control in a sliding window scheme in order to avoid a delay or loss of packets due to an excessive load in an end-to-end connection provided by the third layer or lower, and also avoid an excessive squeeze on the band for other sessions (for further information, see Non-patent Document 2). In the sliding window scheme, a network is made to retain an amount, not exceeding a certain level, of packets (for example, an amount that can be transmitted until ACK corresponding to a transmitted packet arrives), whereby efficient use of the band provided by a connection in lower layers is achieved while avoiding transfer failures due to an excessive load.

An upper limit of the amount of data retained in a network is generally called window size. The sliding window scheme requires the window size defined in proportion to a product of the band and round-trip delay for efficient use of the band. For example, assuming that a processing delay in a transferring node in a lower layer is ignorable, and a physical link along the path consists of wired lines that are short to such a degree that a propagation delay is ignorable, a packet transfer delay is inversely proportional to the band, and therefore, the window size may be the same regardless of band.

In a case that the processing delay in a transferring node in a lower layer or the propagation delay cannot be ignored, however, it is necessary to define a larger window size for a broader band of the lower layer connection for efficient use of the band in a network. On the other hand, a larger window size results in a larger load on a network and an increased probability of a packet delay and/or loss, and therefore, flow control in TCP restricts the transfer band in a path with a delay-band product larger than a certain value, thus hampering efficient use of the potentially available band of the path (for further information, see Non-patent Document 3). A technique for efficient use of the band while suppressing a load on a network below a certain level even in such a case has been proposed, which technique is of parallel TCP, and ensures high band usage efficiency by establishing a plurality of TCP sessions in the same path and keeping the delay-band product for each session not exceeding a certain value (for further information, see Non-patent Document 4).

Also, another technique that is known is an inverse multiplexing technique comprising, when a plurality of paths are present between two nodes, establishing a packet transfer session for each path between the two nodes, and transferring packets in parallel in these sessions with distributed loads to thereby achieve a broad-band communication between the two nodes. For example, there is proposed a technique comprising establishing a TCP session in each path for parallel transfer to achieve node-to-node transfer with a broader band than that in a technique using a single path (for further information, see Non-patent Document 5).

Next, consider a case in which TCP is applied to a path including a wireless link that has a steeply varying delay and/or band. In this case, efficient use of the band requires the window size to be defined according to a condition (time point) in which the product of the delay and band (which will be referred to as delay-band product hereinbelow) is largest. This increases a delay for a narrower band in an inversely proportional manner, thus leading to a problem that, in parallel transfer using a plurality of such paths, jittering among the paths becomes larger. As a means to multiplex paths including a wireless link while avoiding such a problem, there is proposed Mobile Inverse Mux that achieves load distribution among paths while monitoring the speed and delay in the paths so that each packet travels along a path having the smallest delay (for further information, see Non-patent Documents 6, 8, 10 and 11). Mobile Inverse Mux will be abbreviated as MIM hereinbelow.

MIM, which monitors the speed and delay of each path, looks up a stored past transmission history, and predicts a delay of a currently transmitted packet from the history after the time at which a fed-back result is validated, because a path including a wireless link with larger delay involves a lag in feeding back the result of monitoring. By making flow control based on the predicted delay value for each path, jittering in multiplexing the paths is suppressed while achieving efficient use of the band.

Many of inverse multiplexing protocols such as MIM implement a packet sequence control function so as to prevent the sequence of packets transferred via different paths from reversing in transferring them to a downstream node. This function is achieved by, for example, a transmitting node assigning a sequence number to each packet on a flow-by-flow basis, for which flow the sequence is desired to be saved, and a receiving node arranging the packets in a correct sequence according to the received sequence numbers before transferring them to a downstream node.

[Non-patent Document 1] RFC793
[Non-patent Document 2] "Mastering TCP/IP" by Phillip Miller, published by Ohmsha, Lid. (1998).
[Non-patent Document 3] M. Nakamura, et al., "End-Node transmission rate control kind to intermediate routers," PFLDnet 2004.
[Non-patent Document 4] Kakuzawa, et al., "Implementation of Arbitration among Parallel TCP Streams in Long-interval/High-bandwidth Communication," SACSIS 2004.
[Non-patent Document 5] Maki, Hasegawa, Murata, and Murase, "Performance Analysis and Evaluation of TCP Overlay Network", IEICE Technical Report, IN04-96 (2004).
[Non-patent Document 6] T. Nakata, et al., "Efficient bundling of heterogeneous radio resources for broadband Internet access from moving vehicles," in proceedings of Global Mobile Congress 2004, Oct. 11 - 13, 2004, Shanghai, China.
[Non-patent Document 7] Dovrolis, Ramanathan, and Moore, "What Do Packet Dispersion Techniques Measure?," IEEE INFOCOM 2001.
[Non-patent Document 8] Ono, et al., "The Internet in Moving Vehicles (3) "retransmission Control Schemes-," 2004 IEICE General Conference, Article B-5-165 (2004).
[Non-patent Document 9] L. S. Brakmo and L. L. Peterson, "TCP Vegas: End to End Congestion Avoidance on a Global Internet," IEEE Journal of Selected Areas in Communications, Vol. 13, No. 8, p. 1465 (1995).
[Non-patent Document 10] Okanoue, et al., "The Internet in Moving Vehicles (1) -Basic Concept and System Configuration-," 2004 IEICE General Conference, Article B-5-163 (2004).
[Non-patent Document 11] Nakata, et al., "The Internet in Moving Vehicles (2) -Flow Control Schemes-," 2004 IEICE General Conference, Article B-5-164 (2004).

### [DISCLOSURE OF THE INVENTION]

### [PROBLEMS TO BE SOLVED BY THE INVENTION]

As described above, TCP, which conventionally is a widespread flow control scheme of packet transfer sessions, requires a mechanism for keeping a small delay-band product to be retained by each session by establishing a plurality of sessions, for example, for efficient use of the band in a path having a delay-band product greater than a certain level. However, this results in a problem that complicated control is needed, such as load distribution among the sessions. Another problem is that when this technique is used in a path with a band varied, a delay is increased inversely with the band.

On the other hand, MIM, which achieves sophisticated flow control for efficient use of the band while suppressing a delay, poses a problem that the processing load, including creation of a header and preservation of transmission history information, both of which involve a large amount of information, on a packet-by-packet basis restricts the transfer speed.

Moreover, to ensure integrity of transfer, it is necessary, in the flow control protocol such as TCP or MIM, for a receiving node to send back an acknowledgement message such as ACK in a certain cycle or more even when no particular failure is found. Especially, an asymmetric network having significantly different upload and download speeds as in a cellular line has a broader download band than an upload band, and thus, there arises problems that a window size defined according to the upload band may lead to degradation of band usage efficiency, and that a large amount of ACK signals that are sent even when the usage of the upload band is high from the beginning cause an increase in a round-trip delay.

Furthermore, in a protocol such as MIM that makes flow control while feeding back an explicit path condition such as an estimated speed, when the band for the path varies in an increasing direction, a heavier load on that path can keep higher usage efficiency of the band. On the other hand, when the band for the path varies in a decreasing direction, a heavier load on that path results in an increase of a transfer delay, and hence, an increased time taken in feedback; accordingly, the time for which load distribution is conducted based on wrong condition recognition is lengthened. Thus, wrong condition recognition occurring in part of a plurality of paths results in an increase of jittering among the plurality of paths, and an increase of the packet discard rate or retransmission rate as well in a communication by the plurality of paths as a whole. Therefore, there arises a trade-off problem that the window size increased to improve the packet transmission rate following a variation of the band for a path in an increasing trend, may cause an adverse effect in a decreasing trend.

In addition, these flow control protocols pose a problem that the header occupies a large proportion of the data size for packets as a whole and the band available for data transfer is restricted. To address this problem, a header compression technique may be applied. However, to achieve header compression while ensuring reliability of data transfer, a transmitter side and a receiver side must know in common state variables needed in compression and decompression, and the protocol is complicated for updating the variables or confirming synchronization of the variables. Another problem is that synchronization of state variables cannot keep up for a link having a significant delay or loss, and an effect of compression is not apparent.

Moreover, in a case that a single user flow is transferred with its load distributed to several paths in the inverse multiplexing protocol implementing the sequence control function, and when a packet having a sequence number larger than a maximum sequence number that has been currently received by two or more arrives at a receiving node due to a difference in speed among the paths, transfer must be suspended until a packet having a sequence number larger than the maximum sequence number that has been currently received by one arrives, for keeping a correct transfer sequence in the user flow.

However, if packet loss occurs, it is undesirable to wait for lost packets because the transfer sequence cannot be saved, and an additional delay is induced as well. Since a packet subsequent to one in a certain user flow usually belongs to a different user flow in the inversely multiplexed path, it is not possible to estimate a user flow to which a lost packet belongs. Therefore, there arises a problem that wait for a lost packet, which is inherently unnecessary, cannot be prevented, thus impairing the real-time property of transfer.

Moreover, in the conventional packet communication, a transmitting node determines control information to be included in the header for each transmitted packet, and a receiving node reads and analyzes the header for each received packet. At that time, the processing load on the nodes increases with transmitted/received data speed, and the processing capability of a node determines the maximum transfer speed in a specific protocol for the node. In protocols with sophisticated processing such as MIM or TCP, the maximum transfer speed for a node tends to be lower than the band for the path, and the processing speed for flow control, which is introduced in the first place for the purpose of efficient use of the band for the path, becomes a bottleneck, resulting in a problem of degradation of usage efficiency of the band for the path.

Thus, the present invention has been made to address such problems, and its object is to provide a communication technique that reduces loads caused by transmission of control information on data packets to improve communication efficiency.

Another object of the present invention is to provide a technique in packet communication between nodes connected via a plurality of paths, capable of transferring a leader packet storing therein control information using a path with low delay or a path with high reliability to thereby suppress a loss and/or delay of signaling information.

### [MEANS FOR SOLVING THE PROBLEMS]

A first invention for solving the aforementioned problems is characterized in comprising:
grouping a plurality of data packets and a leader packet together in one block; and
compiling control information on the above-described plurality of data packets into the above-described leader packet and transmitting the above-described leader packet, and controlling transmission of the packets based on the control information in the received leader packet.

A second invention for solving the aforementioned problems is, in the above-described first invention, characterized in that the above-described control information is flow control information.

A third invention for solving the aforementioned problems is, in the above-described first invention, characterized in that the above-described control information is retransmission control information.

A fourth invention for solving the aforementioned problems is, in the above-described first invention, **characterized in that** the above-described control information is routing information.

A fifth invention for solving the aforementioned problems is, in the above-described first invention, characterized in that the above-described control information is path information.

A sixth invention for solving the aforementioned problems is, in any one of the above-described first to fifth inventions, characterized in that the above-described control information is control information common to the above-described data packets.

A seventh invention for solving the aforementioned problems is, in any one of the above-described first to sixth inventions, characterized in comprising incorporating identification information that uniquely identifies the leader packet into the above-described data packets.

An eighth invention for solving the aforementioned problems is, in any one of the above-described first to seventh inventions, characterized in comprising incorporating identification information that uniquely identifies a data packet whose control information is compiled, into the above-described leader packet.

A ninth invention for solving the aforementioned problems is, in any one of the above-described first to eighth inventions, characterized in that above-described plurality of data packets or leader packet is transmitted/received via a plurality of lines.

A tenth invention for solving the aforementioned problems is, in the above-described ninth invention, characterized in that the above-described leader packet is transmitted using the fastest one of the above-described plurality of lines.

An eleventh invention for solving the aforementioned problems is, in the above-described ninth invention,
characterized in that a line for transmitting the above-described leader packet or the above-described data packets is selected based on above-described control information.

A twelfth invention for solving the aforementioned problems is, in any one of the above-described first to eleventh inventions, characterized in that an amount of data in a block to be transmitted is determined based on the received control information contained in the leader packet.

A thirteenth invention for solving the aforementioned problems is, in any one of the above-described first to twelfth inventions, characterized in that a transmission time for a block to be transmitted is determined based on the received control information contained in the leader packet.

A fourteenth invention for solving the aforementioned problems is, in any one of the above-described first to thirteenth inventions, characterized in that the speed of a communication path is estimated from reception times of a plurality of data packets belonging to the same block.

A fifteenth invention for solving the aforementioned problems is characterized in comprising:
packet block creating means for grouping a plurality of data packets and a leader packet together in one block, and compiling control information on the above-described plurality of data packets into the above-described leader packet; and
scheduling means for controlling transmission of the packets based on the received control information compiled in the leader packet.

A sixteenth invention for solving the aforementioned problems is, in the above-described fifteenth invention, characterized in that the above-described control information is flow control information.

A seventeenth invention for solving the aforementioned problems is, in the above-described fifteenth invention, characterized in that the above-described control information is retransmission control information.

An eighteenth invention for solving the aforementioned problems is, in the above-described fifteenth invention, characterized in that the above-described control information is routing information.

A nineteenth invention for solving the aforementioned problems is, in the above-described fifteenth invention, characterized in that the above-described control information is path information.

A twentieth invention for solving the aforementioned problems is, in any one of the above-described fifteenth to nineteenth inventions, characterized in that the above-described packet block creating means compiles control information common to the above-described data packets into the above-described leader packet.

A twenty-first invention for solving the aforementioned problems is, in any one of the above-described fifteenth to twentieth inventions, characterized in that identification information that uniquely identifies the leader packet is incorporated into the above-described data packets.

A twenty-second invention for solving the aforementioned problems is, in any one of the above-described fifteenth to twenty-first inventions, characterized in that identification information that uniquely identifies a data packet whose control information is compiled is incorporated into the above-described leader packet.

A twenty-third invention for solving the aforementioned problems is, in any one of the above-described fifteenth to twenty-second inventions, characterized in comprising transmitting means for transmitting the above-described plurality of data packets or leader packet via a plurality of lines.

A twenty-fourth invention for solving the aforementioned problems is, in the above-described twenty-third invention, characterized in that the above-described scheduling means makes control to transmit the leader packet using the fastest one of the above-described plurality of lines.

A twenty-fifth invention for solving the aforementioned problems is, in the above-described twenty-third invention, **characterized in that** the above-described scheduling means selects a line for transmitting the above-described leader packet or the above-described data packets based on the control information.

A twenty-sixth invention for solving the aforementioned problems is, in any one of the above-described fifteenth to twenty-fifth inventions, characterized in that the above-described scheduling means determines an amount of data in a block to be transmitted based on the received control information contained in the leader packet.

A twenty-seventh invention for solving the aforementioned problems is, in any one of the above-described fifteenth to twenty-sixth inventions, characterized in that the above-described scheduling means determines a transmission time for a block to be transmitted based on the received control information contained in the leader packet.

A twenty-eighth invention for solving the aforementioned problems is, in any one of the above-described fifteenth to twenty-seventh inventions, characterized in comprising a packet analyzing section for estimating the speed of a communication path from reception times of a plurality of data packets belonging to the same block.

A twenty-ninth invention for solving the aforementioned problems is characterized in comprising:
packet block creating means for grouping a plurality of data packets and a leader packet together in one block, and compiling control information on the above-described plurality of data packets into the above-described leader packet; and
scheduling means for controlling transmission of the packets based on the control information compiled in the leader packet, which is received from other node.

A thirtieth invention for solving the aforementioned problems is, in the above-described twenty-ninth invention, characterized in that the above-described packet block creating means compiles control information common to the above-described data packets together into the above-described leader packet.

A thirty-first invention for solving the aforementioned problems is, in the above-described twenty-ninth or thirtieth invention, characterized in that identification information that uniquely identifies the leader packet is incorporated into the above-described data packets.

A thirty-second invention for solving the aforementioned problems is, any one of the above-described twenty-ninth to thirty-first inventions, **characterized in that** identification information that uniquely identifies a data packet whose control information is compiled is incorporated into the above-described leader packet.

A thirty-third invention for solving the aforementioned problems is, in any one of the above-described twenty-ninth to thirty-second inventions, characterized in comprising transmitting means for transmitting the above-described plurality of data packets or leader packet via a plurality of lines.

A thirty-fourth invention for solving the aforementioned problems is, in the above-described thirty-third invention, characterized in that the above-described scheduling means makes control to transmit the leader packet using the fastest one of the above-described plurality of lines.

A thirty-fifth invention for solving the aforementioned problems is, in the above-described thirty-third or thirty-fourth invention, characterized in that the above-described scheduling means selects a line for transmitting the above-described leader packet or the above-described data packets based on the control information compiled in the leader packet, which is received from other node.

A thirty-sixth invention for solving the aforementioned problems is, in any one of the above-described twenty-ninth to thirty-fifth inventions, characterized in that the above-described scheduling means determines an amount of data in a block to be transmitted based on the control information contained in the leader packet, which is received from other node.

A thirty-seventh invention for solving the aforementioned problems is, in any one of the above-described twenty-ninth to thirty-sixth inventions, characterized in that the above-described scheduling means determines a transmission time for a block to be transmitted based on the control information contained in the leader packet, which is received from other node.

A thirty-eighth invention for solving the aforementioned problems is, in any one of the above-described twenty-ninth to thirty-seventh inventions, characterized in comprising a packet analyzing section for estimating the speed of a communication path from reception times of a plurality of data packets belonging to the same block.

A thirty-ninth invention for solving the aforementioned problems is characterized in causing a computer to execute:
packet block creating processing for grouping a plurality of data packets and a leader packet together in one block, and compiling control information on the above-described plurality of data packets into the above-described leader packet; and
scheduling processing for controlling transmission of the packets based on the control information compiled in the leader packet, which is received from other node.

As described above, according to the present invention, a plurality of data packets and a leader packet are grouped together in one block, control information on said plurality of data packets are compiled into said leader packet, and transmission of the packets is controlled based on the control information in said leader packet. Since control information can thus be known by a node at an early stage, it is possible to perform signaling at a high speed.

### [EFFECTS OF THE INVENTION]

The present invention can achieve flow control and load distribution based on more accurate estimation of path conditions as compared with conventional techniques, by feeding back the result of estimation of path conditions based on a reception sequence for each packet block between two nodes having one or more selectable paths.

Moreover, since the present invention performs processing of flow control and path selection once for a plurality of packets, the processing load is reduced as compared with conventional techniques in which the processing of flow control and path selection is performed for each transmitted packet.

Furthermore, the present invention suppresses a loss and/or delay of signaling information by integrating flow control information, load distribution information, ARQ information, and sequence control information on each path into a leader packet, and transmitting the leader packet as a first packet of a block via a path with lowest delay or a path with high reliability, thus mitigating a trade-off between band usage efficiency in an increasing trend of the band for the path and followability of control in a decreasing trend thereof.

In addition, according to the present invention, since a receiving node is capable of predicting a packet reception sequence within a block according to information in the leader, communication anomaly can be detected at an early stage by deciding the communication anomaly when inconsistency with the prediction is found.

Moreover, the present invention improves end-to-end jittering because transfer of data in a sequence-controlled buffer is prevented from being suspended longer than necessary.

Furthermore, the present invention achieves reduction of header information in a simpler configuration as compared with conventional techniques of header compression that require sharing of state information between a transmitter side and a receiver side.

### [BRIEF DESCRIPTION OF THE DRAWINGS]

[FIG. 1] FIG. 1 is a system configuration diagram showing a first embodiment of the present invention.
[FIG. 2] FIG. 2 is a configuration diagram of a leader packet of the present invention.
[FIG. 3] FIG. 3 is a configuration diagram of a data packet of the present invention.
[FIG. 4] FIG. 4 shows an example in which a flow control algorithm (PAC scheduler) is applied to the first embodiment of the present invention.
[FIG. 5] FIG. 5 is a flow chart that a scheduling section follows.
[FIG. 6] FIG. 6 is a flow chart that a packet creating section follows.
[FIG. 7] FIG. 7 is a system configuration diagram showing a second embodiment of the present invention.
[FIG. 8] FIG. 8 shows an example in which a flow control algorithm (PAC scheduler) is applied to the second embodiment of the present invention.
[FIG. 9] FIG. 9 shows an example in which a cycle of feedback may be reduced in the second embodiment of the present invention.
[FIG. 10] FIG. 10 shows an example in which precision in estimation of the speed is kept constant in the second embodiment of the present invention.
[FIG. 11] FIG. 11 is a diagram for explaining a third embodiment of the present invention.
[FIG. 12] FIG. 12 is a diagram for explaining a fourth embodiment of the present invention.
[FIG. 13] FIG. 13 is a diagram for explaining a fifth embodiment of the present invention.
[FIG. 14] FIG. 14 is a diagram for explaining an overview of the present invention.
[FIG. 15] FIG. 15 is a diagram for explaining an overview of the present invention (a case of three or more data packets).
[FIG. 16] FIG. 16 is a diagram for explaining an overview of a conventional invention.

### [EXPLANATION OF SYMBOLS]

- 003: Leader packet
- 004, 005, 006: Data packets
- 101, 102: Transferring node
- 201: Buffer section
- 202: Scheduling section
- 203: Packet block creating section
- 204: Packet transmitting section
- 205: Storage section
- 206: Packet receiving section
- 207: Packet analyzing section
- 208: Packet transferring section
- 301: Data packet
- 302: Leader packet

### [BEST MODES FOR CARRYING OUT THE INVENTION]

### (Overview of the Invention)

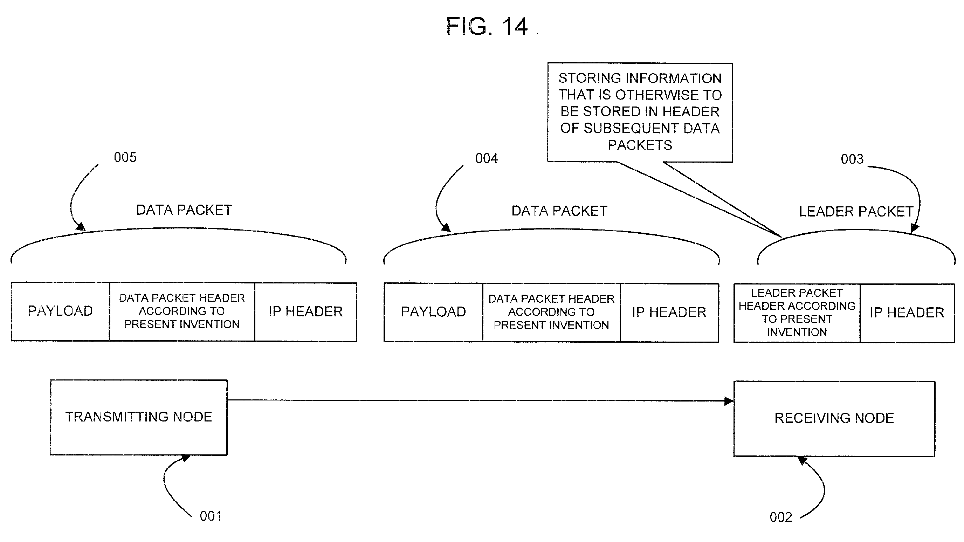

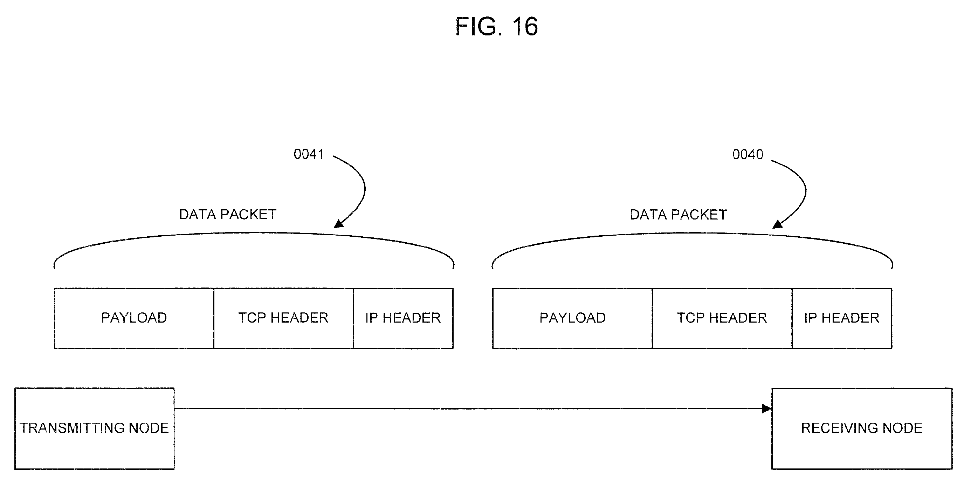

A first embodiment will now be described with reference to FIG. 14. FIG. 14 shows packet transfer from a transmitting node 001 to a receiving node 002 in accordance with the present invention. In packet transfer using TCP, which is a fourth-layer protocol in conventional techniques, each packet is comprised of an IP header, a TCP header, and a payload in sequence from the front, as shown in FIG. 16. In TCP, when a plurality of packets are transmitted concurrently or within such a short period of time that no change is made in control information, control information in the TCP header given to the packets is all the same.

According to the present invention, when a plurality of packets are transmitted concurrently or within such a short period of time that no change is made in control information, control information is stored only in the header of a top leader packet 003, wherein the header for the leader packet according to the present invention is appended with an IP header indicating a destination node as in conventional techniques, and the leader packet that is comprised of the IP header and the header for the leader packet according to the present invention is first transmitted.

Subsequent to the leader packet 003, data packets 004, 005 are then transmitted, which packets contain a header for the data packet according to the present invention having a smaller amount of information than that of the header for the leader packet.

Thus, according to the present invention, control information that is conventionally stored in the header of each packet is now stored in the header of the top leader packet 003, and a time required to receive the packet 003 is shorter than that for the conventional packet 0040. Therefore, the receiving node can know the control information (for example, ACK information, etc.) at an earlier stage than in the conventional packet transfer methods. Consequently, it is possible to quickly conduct signaling based on the control information.

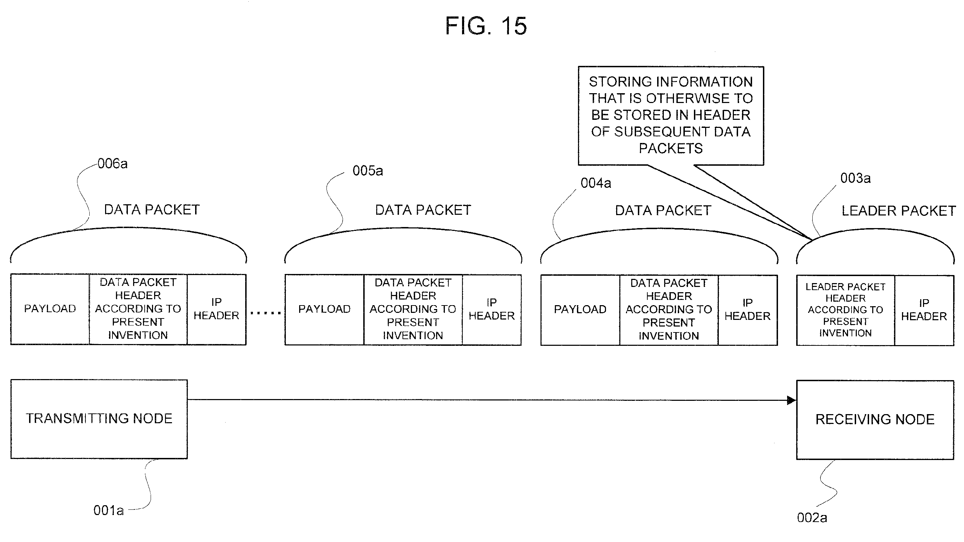

Such an effect is similarly provided when three or more data packets are to be transmitted as shown in FIG. 15. Referring to FIG. 15, data packets 004a, 005a, 006a that are transmitted concurrently or within such a short period of time that no change is made in control information are each given the fourth-layer header having the same amount of data that is redundant in conventional techniques; on the other hand, according to the present invention, the control information corresponding to the redundant portion in the packet header in conventional techniques is compiled in the header of the top leader packet 003a, and the data packets are given the header for the data packet according to the present invention, which is lighter than the TCP header, as the fourth-layer header.

As shown in FIG. 15, information that is redundantly possessed by a large number of packets in conventional techniques is now deposited in a representative leader packet, whereby the total header size for packets as a whole can be reduced as compared with TCP while keeping the same amount of information for signaling according to the header as that in TCP. Consequently, transmission efficiency for the whole packet transmission can be improved.

Moreover, as shown in FIG. 15, another effect obtained by creating one leader packet for a large number of packets and transmitting them is that precision in speed measurement for a path is enhanced. While the speed can be measured by two packets at minimum, a larger number of packets give higher precision.

One reason thereof is as follows: When many packets in one flow are transmitted, it is highly probable that a packet that belongs to another flow is interposed between the packets. This is a usual phenomenon in actual communication paths, and thus, a larger number of packets enable speed measurement in a condition approximating to the actual communication paths.

Another reason is as follows: a larger number of packets contained in a packet block result in a larger difference in reception time between the head packet and tail packet involved in one measurement, and accordingly, temporal resolution required in a receiving node may be coarser. As such, use of a packet block according to the present invention improves precision of the speed for a node having the same temporal resolution.

Up to this point, an overview of the present invention has been described. Now the present invention will be described in more detail.

### (First Embodiment)

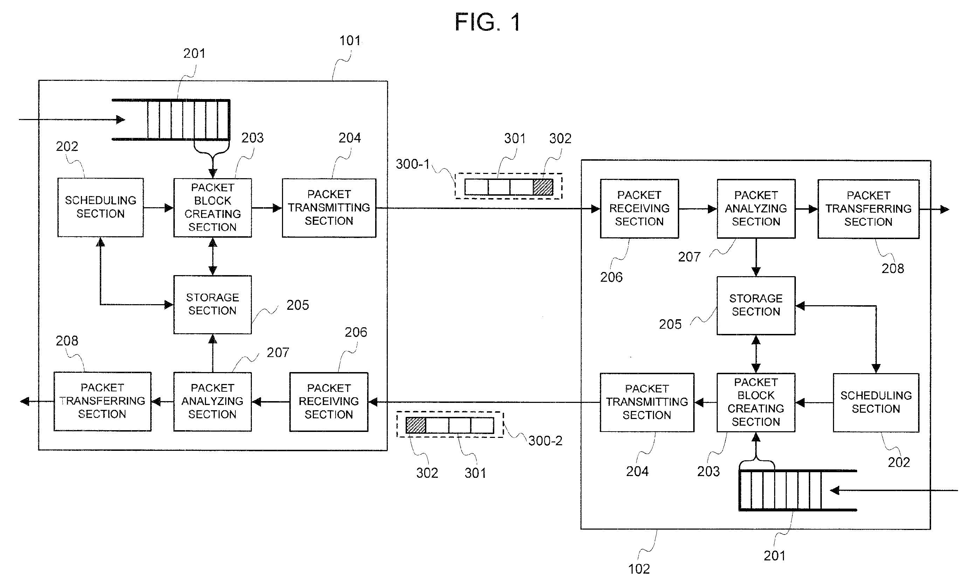

FIG. 1 shows a first embodiment of the present invention. In the drawing, packets transfer is made between a transferring node 101 and a transferring node 102 using a packet transfer method according to the present invention. Since the present embodiment assumes a two-way symmetric protocol, the transferring node 101 and transferring node 102 have a similar configuration. While the following description will be made taking an example of packet transfer from the transferring node 101 to the transferring node 102, a similar operation applies to transfer from the transferring node 102 to the transferring node 101.

First, a packet transmission operation in the transferring node 101 will be described. The transferring node 101 receives data to be transferred to the transferring node 102 from another node or from data generating means such as a user application on the same node, and stores the data into a buffer section 201.

A scheduling section 202 controls transmission based on scheduling information stored in a storage section 205. For example, it determines a time at which transmission of the packets is to be initiated and a configuration of data packets (which will be referred to as packet group hereinbelow) to be transmitted subsequent to a leader packet, which will be discussed later, and upon the time at which transmission of the packets is to be initiated, it notifies a packet block creating section 203 of the configuration of the leader packet and packet group. The packet block creating section 203 that has received the notification of the configuration of the leader packet and packet group compiles control information on the data packets into the leader packet. For example, it creates a leader packet based on the notified configuration and the flow control information stored in the storage section 205, takes a number of data based on the notified configuration out of the buffer section 201, creates a packet group by appending predefined header information to each taken-out datum, and passes the packet group and leader packet concurrently or at a predefined interval to a packet transmitting section 204. The set of packets transmitted at that time will be referred to as packet block hereinbelow.

The packet transmitting section 204 sequentially transfers packets passed from the packet block creating section 203 toward a packet receiving section 206 in the transferring node 102. Reference numeral 300-1 designates a schematic diagram of a packet block transmitted from the packet transmitting section 204 on a communication path, indicating that a leader packet 302 is followed by a plurality of data packets 301.

Next, an operation of the transferring node 102 in receiving the packet block 300-1 from the transferring node 101 will be described. A packet analyzing section 207 extracts given information from the packet block 300-1, which will be discussed later, conducts specified measurement on the received packets, which will be discussed later, and stores a result thereof in a storage section 205 as flow control information. The data in the packet processed at the analyzing section 207 is sequentially passed to a packet transferring section 208, which transfers the data received from the packet analyzing section 207 to a next transferring node, or data receiving means, such as a user application, in the same node.

A scheduling section 202 in the transferring node 102 operates similarly to that in the transferring node 101 to determine a time at which transmission of the packets is to be initiated and a configuration of the packet group based on the scheduling information stored in the storage section 205, which will be discussed later, and upon the time at which transmission of the packets is to be initiated, it notifies a packet block creating section 203 of the configuration of the leader packet and packet group.
The packet block creating section 203 in the transferring node 102 creates a leader packet based on the notified configuration and the flow control information stored in the storage section 205, constructs a packet block 300-2 along with the data stored in the buffer section 201, and transmits it via a packet transmitting section 204 to a packet receiving section 206 in the transferring node 101. After the transmission, a transmission history is stored in the storage section 205.

On receipt of a new packet block 300-2 from the transferring node 102, a packet analyzing section 207 in the transferring node 101 extracts given information from the packet block 300-2, conducts specified measurement on the received packets, stores a result thereof in the storage section 205 as flow control information, and notifies the scheduling section 202 that the flow control information is updated. The scheduling section 202 updates scheduling information also stored in the storage section 205 based on the updated flow control information. Subsequent determination of the packet transmission time and packet block configuration are made based on the updated scheduling information.

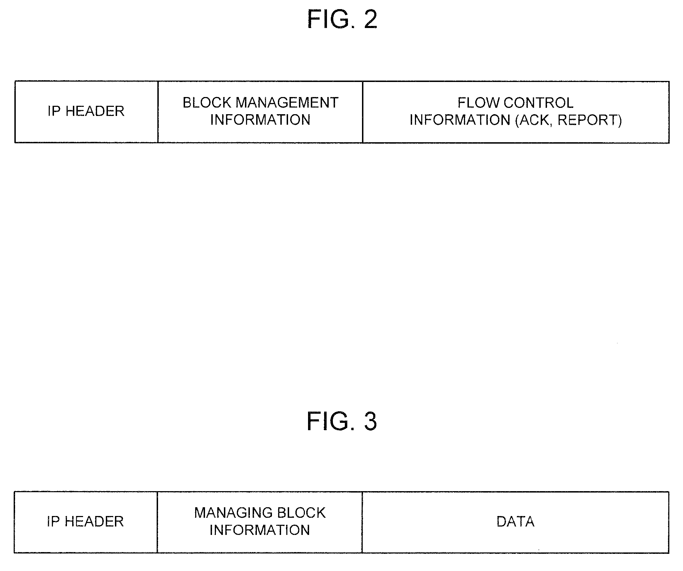

FIG. 2 shows an exemplary structure of the leader packet used in the present invention. Although the present invention may be implemented as a protocol in any communication layer, it is assumed that the present embodiment implements a protocol in the fourth layer, and the example of the structure here is presented with a transfer protocol in the lower layer being IP.

As shown in FIG. 2, a leader packet according to the present embodiment includes a leading IP header, and subsequent block management information and flow control information in the header for the leader packet. A structure of a data packet is shown in FIG. 3, in which an IP header, and in addition, managing block information is contained in the header for the data packet, and data body is contained in the payload.

The block management information is attribute information created by the transmitting node, including the number of packets in a packet block, priority of the packet, etc. On the other hand, the managing block information is identification information for uniquely identifying a leader packet. In other words, it is information for identifying a packet block to which each data packet belongs. In the present embodiment, the transmitting node assigns a unique sequence number to each packet block, which serves as the managing block information. It is also assumed that a packet in a block is sequentially transmitted led by the leader packet (i.e., the packet in a block is passed from the packet block creating section 203 to the packet transmitting section 204), and the block management information contains a time stamp at the transmission, and an extent of the sequence number of packets in the present packet block. Based on such information, the receiving node conducts measurement of a delay and estimation of a band for the communication path according to a packet train scheme disclosed in the Non-patent Documents (which scheme conducts band estimation from [the total amount of data] / [difference in reception time between the last packet and first packet]).

Moreover, identification information for uniquely identifying data packets whose control information are compiled may be included in the leader packet to secure a relation between the leader packet and data packet group.

Based on the aforementioned pre-conditions, a flow control mechanism according to the present embodiment will be particularly described referring again to FIG. 1. On receipt of the leader packet 302 in the packet block 300-1 from the packet receiving section 206, the packet analyzing section 207 in the transferring node 102 extracts a time stamp and an extent of the sequence number for the packet block 300-1 from the block management information. It also writes a difference between the reception time and the extracted time stamp into the storage section 205 as a result of estimation of a path delay. In receiving subsequent data packets 301, the data size of every data packet whose sequence number falls within the extent of the sequence number for the packet block 300-1 is stored. Moreover, when a received packet is a packet last received in the block, the total packet size of the data packets in the received packet block divided by a difference between a reception time of that packet and that of the leader packet is written into the storage section 205 as a result of estimation of the band for the communication path.

By such an operation, the flow control information (the result of estimation of the path delay and the result of estimation of the path band) recorded by the packet analyzing section 207 in the transferring node 102 into the storage section 205 is incorporated into the leader packet of the packet block 300-2 to be transmitted from the transferring node 102 to the transferring node 101, and is then delivered to the storage section 205 via the packet analyzing section 207 in the transferring node 101. On delivery of the new flow control information, the storage section 205 in the transferring node 101 notifies the scheduling section 202 of update of the flow control information, and on receipt of the notification, the scheduling section 202 updates scheduling information using the updated flow control information, i.e., the result of estimation of the path delay and the result of estimation of the path band, and thereafter, a packet block is constructed based on the updated scheduling information.

Up to this point, exemplary configuration and operation of nodes in which a packet block transfer scheme according to the first embodiment is implemented have been described. Now, an exemplary flow control algorithm that the scheduling section 202 for determining the transmission time for a packet block, and the packet block creating section 203 for determining the configuration of the packet block in FIG. 1 follow will be described hereinbelow.

As a first example of the flow control algorithm, the following description will be made on a flow control algorithm in which window control used in TCP is applied to determine the window size based on a path band estimated according to the packet train scheme. In this embodiment, a leader packet 302 transmitted from the transferring node 102 to the transferring node 101 contains ACK information, and a reception window size (the amount of receivable data determined by the receiving node) similar to those used in TCP. The transferring node 101 that has received the leader packet 302 conducts processing of transmission to the transferring node 102 according to a procedure as follows: On receipt of the leader packet 302, the packet analyzing section 207 records the ACK content in the leader packet 302 into the storage section 205, and the storage section 205 notifies a new ACK reception event to the scheduling section 202.

The scheduling section 202 notifies the packet block creating section 203 of the amount of transmittable data obtained as a difference between the reception window size extracted from the received leader packet and the amount of data of packets transmitted after a packet to which ACK has been sent back, extracted from a transmission history recorded in the storage section.

The packet block creating section 203 takes a maximum amount of data whose packet block size including the leader packet 302 does not exceed the amount of transmittable data out of the buffer section, and creates a data packet having each datum appended with managing block information. It also creates a leader packet containing the ACK information and block management information, and passes a packet block consisting of these packets to the packet transmitting section 204. If the amount of transmittable data is less than a predetermined lower limit, packet block creation is suspended until a next notification of the amount of transmittable data by the scheduling section 202.

When the packet block is successfully transmitted, a transmission history is recorded into the storage section 205. The reception window size used by the transferring node 101 here is determined according to a path speed estimated by the packet analyzing section 207 in the transferring node 102 when it received the packet block from the transferring node 101. The value of the reception window size is given as, for example, a product of a predetermined maximum round-trip delay and the estimated speed.

Alternatively, an upper limit based on a remaining amount in the reception buffer may be separately defined, and when the upper limit is not exceeded, a value based on the estimated speed may be employed in determining the reception window size.

As described above, window control is employed supported by the result of estimation of the speed, and information conventionally possessed by a plurality of packets redundantly is deposited in a representative leader packet, whereby effects of reduction of the node's processing load and/or reduction of the header size can be obtained. In addition, the following effects are brought out: First, since control is made so that the round-trip delay time does not exceed a predetermined maximum round-trip delay time regardless of the difference in speed between paths in forward and backward directions, an effect that delay dispersion is reduced in a path with varying speed as compared with conventional window control is achieved. Moreover, since the window size is directly obtained using a result of estimation of the speed, there is obtained a characteristic feature that the band can be efficiently used even in a path with significant loss or delay variation. This is advantageous as compared with Non-patent Documents 1 and 9. Specifically, according to Non-patent Documents 1 and 9, a smaller one of the transmitter's congestion window size and reception window size is employed as a window size, so that control is made to reduce the window size in the event of packet loss. In contrast, the present invention determines the window size using a result of estimation of the speed even in the case that packet loss occurs, and thus, the window size itself is not affected and efficient use of the band is achieved.

It should be noted that the leader packet may contain the result of estimation of the speed, in place of the reception window size, and the window size may be calculated by the packet analyzing section 207 in a transmitting node. Moreover, the amount of transmittable data calculated in receiving a leader packet may be divided into a plurality of packet blocks and transmitted at transmission intervals determined by the estimated speed, rather than transmitting all of them at a time. However, the transmission interval in such a case must be such a value that a previously transmitted packet block and subsequently transmitted packet block come into contact with each other on the path. Moreover, by transmitting a packet block thus divided, the burst size sent out to the path is reduced, and an effect of reduction in probability of packet loss is expected.

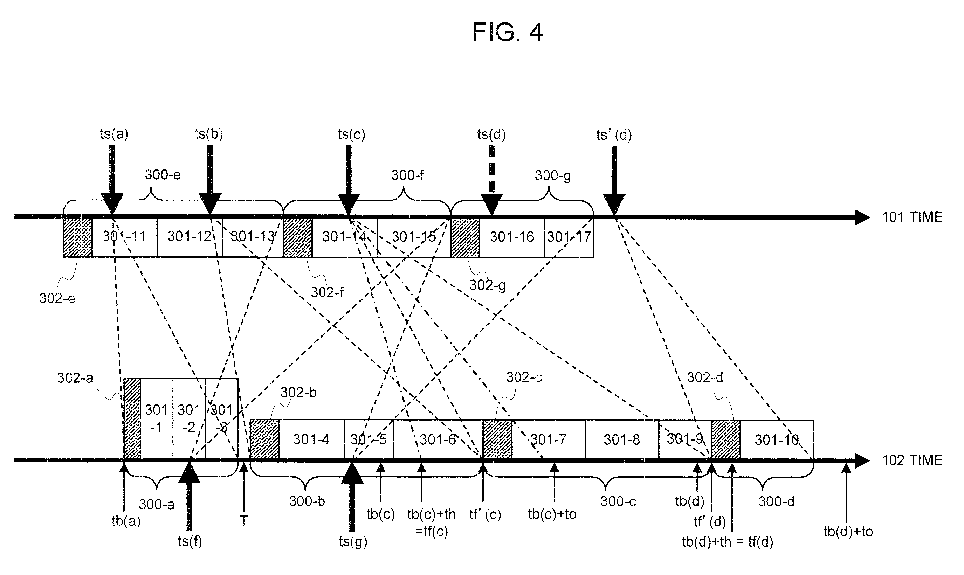

As a second example of the flow control algorithm, the following description will be made on a method in which the method of a PAC scheduler disclosed in Non-patent Document 6 is applied. A basic operation of the PAC scheduler in a transmitting node comprises: predicting a current path delay based on the delay fed back by a receiving node, estimated speed, and transmission history after a packet used in measuring these path conditions; and transmitting a next packet at a time at which the predicted delay becomes less than a predetermined threshold. An example of the operation of the flow control protocol in which this process is applied to the packet block transfer scheme will be described with reference to FIG. 4.

In FIG. 4, a number line designated as "101 Time" represents a time at the transferring node 101, and a number line designated as "102 Time" represents a time at the transferring node 102. Moreover, it is assumed that the band of the path is lowered after a time T on the node 102, as compared with that before T. The transferring node 101 has transmitted a packet block 300-a at a time ts(a), and its head portion arrives at the transferring node 102 at a time tb(a). The symbol tb(a) designates a time at which the head of the packet block 300-a arrives at the receiving node in a no-load condition.

Specifically, since no load is applied before ts(a) in the node 101, the head of the packet block 300-a arrives at the node 102 only with a delay in a no-load condition. The node 102 notifies the node 101 of an estimated speed calculated from the reception times of the leader packet 302-a and data packet 301-1, and delay information estimated from a time stamp provided in the leader packet 302-a and the reception time at the transferring node 102, by putting them into a leader packet 302-f of a packet block 300-f to be transmitted from the transferring node 102 to the transferring node 101 at ts(f).

Following the packet block 300-a, the node 101 has transmitted a packet block 300-b assuming a constant path band. After transmitting the packet block 300-b, path information (estimated speed and delay) is updated according to reception of 302-f, which is information before the time T, so that the node 101 decides that the path band is still in a no-load condition as in 300-a transmission, and transmits a packet block 300-c at a time ts(c). At that time, the node 101 determines the time ts(c) according to the method as follows: It determines the time ts(c) such that a time tf(c) at which the head of the packet block 300-c is expected to be received, which time tf(c) is obtained from path information (estimated speed and delay) contained in the received packet 302-f and a transmission history after the packet block 300-a used in measuring that path information, is equal to as or earlier than a predicted arrival time in a no-load condition tb(c) added with a threshold 'th.'

The predicted arrival time in a no-load condition tb(c) here is a predicted time at which the head of a packet transmitted via the communication path assumed to be in a no-load condition at ts(c) should arrive at the receiving node 102. Therefore, the node 101 expects at ts(c) that the head of the packet block 300-c will be delivered at tb(c)+th. Moreover, the size of the packet block 300-c is determined so that a predicted arrival time of its tail falls before tb(c) +to, i.e., tb(c) added with a maximum delay margin 'to.'

The maximum delay margin indicates a threshold such that no packet transmission is to be made on a path predicted to have a delay beyond that threshold. That is, when "the maximum delay margin is 'to,'" no transmission is made for a packet 'p' using a path 'r' until a transmission time such that a predicted arrival time in transmitting the packet 'p' via the path 'r' by the transmitting node becomes (transmission time-to) or later. In contrast, a packet can be transmitted immediately via a path in which the predicted arrival time < (current time-to).

In this embodiment, however, since the path band actually becomes smaller after the time T, the propagation delay for the packet block 300-b is greater than that predicted by the node 101 to cause the start of reception of the packet block 300-c to be delayed to tf'(c) and the reception completion time for the tail data packet 301-9 to be later than the time tb(c)+to that has been predicted, which time becomes tf'(d). The node 102 has transmitted a packet block 300-g at ts(g), whose leader packet 302-g contains path information (i.e., information indicating a reduced path band) detected on the reception of the packet block 300-b. Since the node 101 thus knows reduction in the path band by receiving the packet 302-g, it updates path information accordingly to modify the transmission time for a next packet block 300-d, which was scheduled to be transmitted at ts(d) before the update, to ts'(d). In addition, the size of a packet block to be transmitted from the node 101 to the node 102 is also modified to a smaller value as compared with the packet block 300-b or 300-c.

The aforementioned decision is made from a result of calculation of the transmission time and block size so that the predicted arrival delay tf(d) for the head of the block obtained using the updated path information and transmission history is equal to or smaller than tb (d)+th, and the predicted arrival time for the tail of the block is equal to or smaller than tb(d)+to. Actually, the path condition changes in a period of time from ts(g) to tf(d), and therefore, tf'(d) at which the head actually arrives is deviated from tf(d) as shown.

This deviation is also incorporated in transmission scheduling for subsequent packet blocks by feedback of the next measurement result. By such an operation, the PAC scheduler makes transmission time control to correct the deviation of the predicted arrival time, and attempts to achieve both efficient use of the band and suppression of a delay. While the window control described earlier provides control in terms of a round-trip delay, the PAC scheduler individually measures a delay in each one-way path and feeds it back, and thus, there is provided an advantage that control can be made suitably adapted to each path even in a path having different conditions in forward and backward directions. For example, in a case that the band in a forward direction is larger relative to a current load and the band in a backward direction is on the contrary smaller relative to the current load, a delay is increased only in the backward direction. In such a case, control based on a round-trip delay causes transmitting nodes both in the forward and backward directions to reduce a load on that path, resulting in hampering efficient use of the band for the path in the forward direction. On the other hand, separate monitoring of a delay of the path in the forward and backward directions reveals that no load reduction is needed in the path in the forward direction, thus enabling the band for the path in the forward direction to be efficiently used.

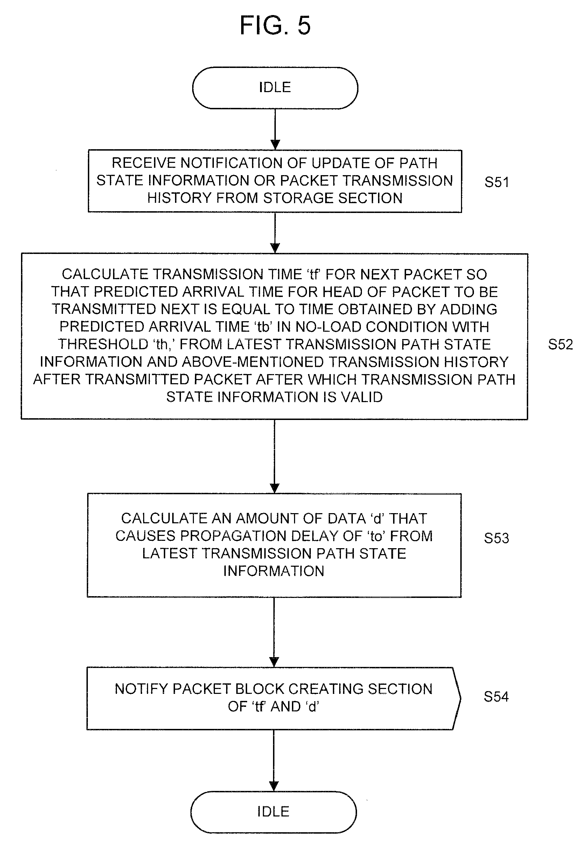

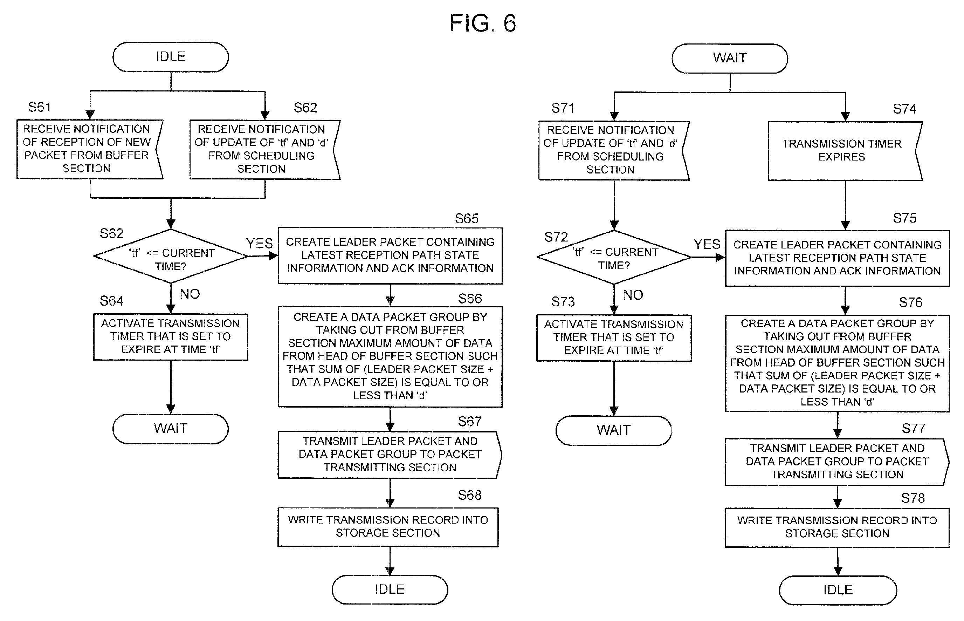

A flow chart that the scheduling section 202 follows to achieve the operation of the aforementioned flow control protocol is shown in FIG. 5, and a flow chart that the packet block creating section 203 follows is shown in FIG. 6. The scheduling section 202 determines the time at which a next packet block becomes transmittable and the block size each time the content in the storage section 205 is updated, and notifies the result to the packet block creating section 203.

First, FIG. 5 will be particularly described hereinbelow. At processing S51, once the path state information or packet transmission history information has been updated, notification thereof is received from the storage section 205. Next, from the latest transmission path state information, and the transmission history after a transmitted packet after which the transmission path state information is valid, a transmission time (tf) for a next packet is calculated so that a predicted arrival time for the head of the packet to be transmitted next is equal to a predicted arrival time in a no-load condition (tb) added with a threshold (th) (S52). Next, from the latest transmission path state information, the amount of data (d) that is predicted to cause a propagation delay of the maximum delay margin 'to' is calculated (S53). The thus-calculated packet transmission time (tf) and amount of data (d) are then notified to the packet block creating section 203 (S54), and the processing is terminated.

The packet block creating section 203 constructs a packet block of a size within a block size notified by the scheduling section 202 insofar as the buffer section 201 contains data and a packet block is transmittable, and passes it to the packet transmitting section 204.

Referring to FIG. 6, the start condition is classified into two types: wait and idle. This is because the processing of "transmitting a packet block after a transmittable time is reached" is implemented with the aid of a timer. In a period of time for waiting for expiration of the timer, the scheduling section 202 remains in the wait condition. On the other hand, the idle condition is a condition in which the timer is not waited for or data to be processed is not received.

FIG. 6 will be described hereinbelow.

First, a case of the idle condition will be described. In this condition, the processing is started when "a notification of reception of a new packet is received from the buffer section 201" (S61), or "a notification of update of the packet transmission time (tf) and amount of data (d) is received from the scheduling section 202" (S62). Once the processing is started, a decision is first made as to whether packet transmission time (tf) ≤ current time (S63). If the decision results in No, a timer is activated to expire at the time `tf' and the processing is terminated (S64), turning into a wait condition. If the decision at S63 results in Yes, a leader packet containing the latest reception path state information and ACK information is created (S65). Next, from the buffer section 201 are taken out the maximum amount of data from the top of the buffer such that the packet block size is equal to or less than the amount of data (d) to create a data packet group (S66). Next, the leader packet and data packet group are transmitted to the packet transmitting section 204 (S67). Next, a transmission record is written into the storage section 205 (S68), and the processing is terminated, again turning into an idle condition.

Next, a case of the wait condition will be described. The processing when "a notification of update of the packet transmission time (tf) and amount of data (d) is received from the scheduling section 202" in the wait condition (S71) is similar to the aforementioned processing when "a notification of update of the packet transmission time (tf) and amount of data (d) is received from the scheduling section 202" in the idle condition.

The processing when the transmission timer expires in the wait condition is similar to the aforementioned processing of S65 - S68 in the idle condition.

Although in the description of the algorithm above, a notification of update of the content in the storage section 205 to the scheduling section 202 is performed by the storage section, a similar operation is achieved when this processing is performed by the packet analyzing section 207, packet block creating section 203 or packet transmitting section 204.

In executing the above-described PAC scheduling, knowledge of the path delay in a no-load condition is needed for determining tb(a), etc. Although this knowledge may be measured beforehand and used as a constant, a procedure as follows can achieve this operation during a communication when update is desired to be conducted in order to avoid an influence of the path condition, drift of a timer or the like. First, at the packet analyzing section 207 in the receiving node, and when there is an interval from a reception time of the tail of a certain packet block A to a reception time of the head of a next packet block B, it is considered that the path has a surplus capacity and the head packet of the packet block B arrives in a no-load condition.

In the example of FIG. 4, the leader packet 302-b of the packet block 300-b is received at an interval from reception of the tail of the immediately preceding packet block 300-a, so that it arrives in a no-load condition. When such an interval is detected, the transferring node 102 notifies the transferring node 101 of no-load delay detection by incorporating information indicating that the packet 302-b arrives with no load into the leader packet 302-g destined to the transmitting node.

The transferring node 101 that has received the leader packet 302-g updates the path delay value in a no-load condition to a delay of 302-b.

When the PAC scheduler is employed, the no-load delay value is periodically used. Thus, when a no-load delay is not detected over a certain period of time, a delay margin 'th' representing a block transmission threshold can be set as a negative value to forcibly induce no-load transfer, hence achieving a path delay value in a loaded condition in a cycle within the certain period of time. To this end, 'th'<0 is established to create a condition in which data can be transmitted only when the path has no load.

As explained above, each component in the transferring nodes 101 and 102 operates to feed back the result of monitoring of a delay and a speed of a communication path to achieve packet traffic control, and thus, the present invention enables packet transmission taking account of path information (estimated speed and delay). Moreover, since signaling information is compiled into a leader packet for communication as described above, extraction of flow control information on a receiver side and update of scheduling information on a transmitter side are both performed at a frequency of packet block transmission/reception, unlike conventional techniques in which they are performed at the same frequency as packet transmission/reception, the processing load on transferring nodes is reduced.

Furthermore, since signaling information is omitted from data packets and compiled into a leader packet, when the number of packets in one packet block is greater than a certain value, there is achieved an effect that the total packet size is accordingly reduced as compared with conventional techniques for the same amount of data. In addition, high-precision path band estimation in the packet train scheme is achieved using a dedicated probe packet (dummy packet), for example, that is otherwise used merely for speed measurement, without degrading band usage efficiency.

While packets in a packet block are simultaneously transmitted in the preceding explanation in order to maximize effectiveness of speed measurement, the present invention may be practiced with a plurality of packets transmitted at a rate higher than the bottleneck band and at a constant transmission speed, rather than transmitted simultaneously. This is because the distribution of packets measured on a receiver side reflects the bottleneck band and thus band estimation is possible.

In this case, the estimated speed cannot be obtained when the bottleneck band for the path is equal to or greater than the transmission speed; however, it is possible for an application requiring a specific speed, for example, to decide whether the path is capable of transfer at that speed or faster. This is because the reception rate lower than the transmission rate means that the transfer rate is restricted by the path speed, and the speed can be measured. Otherwise, it can be known at least that the path speed is equal to or higher than the transmission rate (because any link having a rate lower than the transmission rate is not present on the path). Since a load applied to the path can be reduced as compared with simultaneous transmission by keeping the transmission speed below a certain level, possibility of packet loss due to an excessive load can be reduced.

While according to the first embodiment as described above, only monitoring information (path information) on the path delay and band is incorporated as flow control information, reception acknowledgement information, etc. may be additionally included. For example, when reception acknowledgement for a leader packet and identification information for data packets that have not been received yet in a corresponding packet block (retransmission control information) may be incorporated to accurately identify packets that should be retransmitted by a transmitter side.

In a case that a leader packet is lost, information indicating loss of the leader packet and ACK information based on the sequence number similar to that used in TCP, for example, may be employed in combination to maintain integrity of transmission. For example, the leader packet may be assigned with a sequence number and the receiver side may be configured to send back ACK information, whereby lossless transfer may be secured both for leader packets and data packets by the transmitter side retransmitting a packet to which ACK has not been sent back.

Moreover, while according to the first embodiment, a single leader packet is employed, a plurality of leader packets may be employed for the sake of redundancy. At that time, a clone of the same packet may be created, or the plurality of leader packets may be configured to together cover block control information on the whole block.

The leader packet according to the present invention may also contain the data body in a case that a packet block is made up with a plurality of data packets; and moreover, in a case that block management information employs an existing identifier, for example, an 'Identification' field in the IP header, to identify a packet in a block, managing block information is not needed in a data packet.

Even when the limitations that "a leader packet contains no user data," and "a data packet contains managing block information" are thus excluded, characteristic features of the present invention, that is, a process of incorporating information that allows identification of packets in a block and a method of generating flow control information therefrom into a leader packet, and a process of generating flow control information at a receiving node corresponding to a packet block to which a received packet belongs, are viable.

It should be noted that the aforementioned control information may be routing information.

It is not necessary that all packet to be transmitted each belong to a packet block, and it is possible, for example, to construct a packet block for transmission only when periodical line monitoring is to be performed, and individually transmit data packets in a period after a result of the monitoring is obtained up to a time when a next monitoring is to be performed.

### (Second Embodiment)

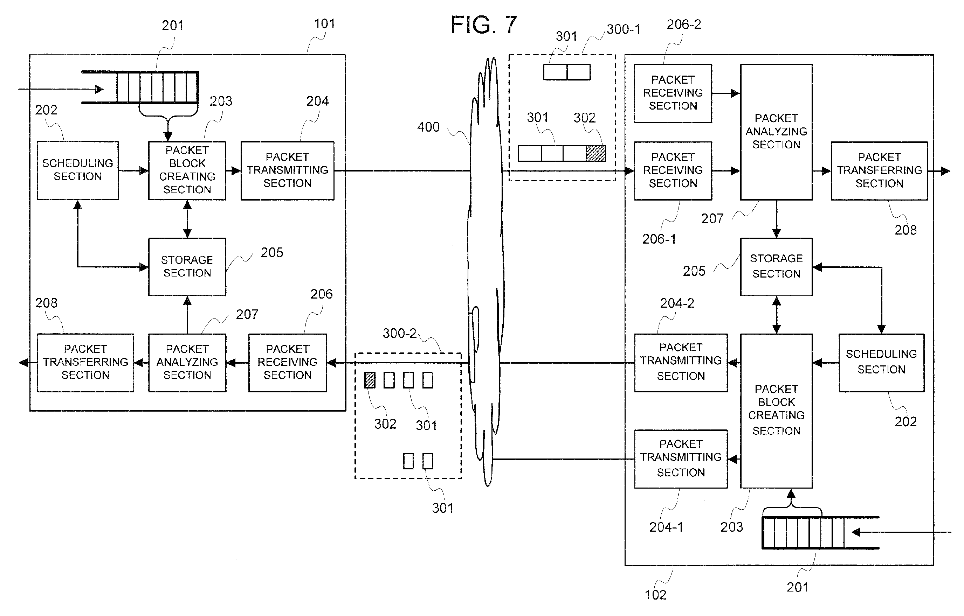

Next, a second embodiment of the present invention will be described. FIG. 7 shows a configuration of transferring nodes 101 and 102 for use in the present embodiment. While the configuration of the transferring node 101 is similar to that employed in the first embodiment in FIG. 1, the transferring node 102 comprises a plurality of packet receiving sections 206 and a plurality of packet transmitting sections 204. An IP network 400 lying between the transferring nodes 101 and 102 provides a path from the packet transmitting section 204 in the transferring node 101 to a packet receiving section 206-1 in the transferring node 102 and a path to a packet receiving section 206-2, these paths having respective links that are physically separate in general, and the band and delay are assumed to vary in a mutually independent manner. Likewise, the band and delay for a path from the packet transmitting section 206-1 in the transferring node 102 to the packet receiving section 204 in the transferring node 101 and a path from the packet receiving section 204-2 are assumed to vary in a mutually independent manner.

The present embodiment is an application of the present invention to a case in which a plurality of selectable paths are present between two nodes as described above. While the packet structure and a signaling mechanism for flow control according to the present embodiment are similar to those in the first embodiment, the content in the flow control information and scheduling information, and the configuration of the packet block are different from those in the first embodiment.

A packet block according to the present embodiment consists of data packets sent out to each one of a plurality of paths, and one or more leader packet. It is assumed that a sequence number is given on a path-by-path basis, and the leader packet comprises as block management information a time stamp, and an extent of the sequence number of packets in a packet block on a path-by-path basis. Estimation of a delay and a speed by the packet analyzing section 207 is also conducted on a path-by-path basis. Likewise, flow control information in the leader packet contains a result of estimation of the delay and speed on a path-by-path basis.

The packet blocks 300-1 and 300-2 shown in FIG. 7 represent an example of two selectable paths and one leader packet. The packet block creating section 203 creates one packet block for a plurality of paths, and the packet transmitting section 204 sends each packet in the block via a path designated by the packet block creating section 203.

Since path band estimation according to the packet train scheme is enabled when two or more packets are concurrently transmitted on a path or they are transmitted at a transmission speed higher than the bottleneck band of the path, it is necessary to transmit two or more packets in one packet block via each path in order to allow band estimation. To this end, for the path in which the number of packets to be transmitted is one as a result of construction of a packet block, a dummy packet is transmitted along with the packet to be transmitted. The dummy packet may contain only a sequence number, for example.

A flow control algorithm for use in the present embodiment may be the example of the flow control algorithm for use in the first embodiment extended for application.

The window control scheme, which is described in the first embodiment as a first exemplary flow control algorithm, is extended in the second embodiment as follows: The leader packet is configured to incorporate therein the ACK information and reception window size for all paths. The scheduling section 202 in the transferring node that has received the leader packet calculates the amount of transmittable data for each path, which will be described later, and notifies the result to the packet block creating section 203.

The packet block creating section 203 takes data in the buffer section and determines assignment of the data to each path so as to prevent the portion of the packet block for each path from having data exceeding the amount of transmittable data.

A path whose amount of transmittable data is less than a predetermined lower limit, however, is assigned with no data. The leader packet is assigned to one of paths having the largest amount of transmittable data. The same leader packet may be assigned to an additional path for the sake of redundancy.

To a path to which only one packet of data among leader and data packets is assigned, a dummy packet is assigned at the same time. Once a path assigned to each packet in a block has been determined, all packets in the block, along with information on such assignment, are passed to the packet transmitting section 204.

The information on the packets passed to the packet transmitting section 204 is recorded in the storage section as a transmission history. Determination of the reception window size at the receiving node is conducted in a similar manner to that in the first embodiment.

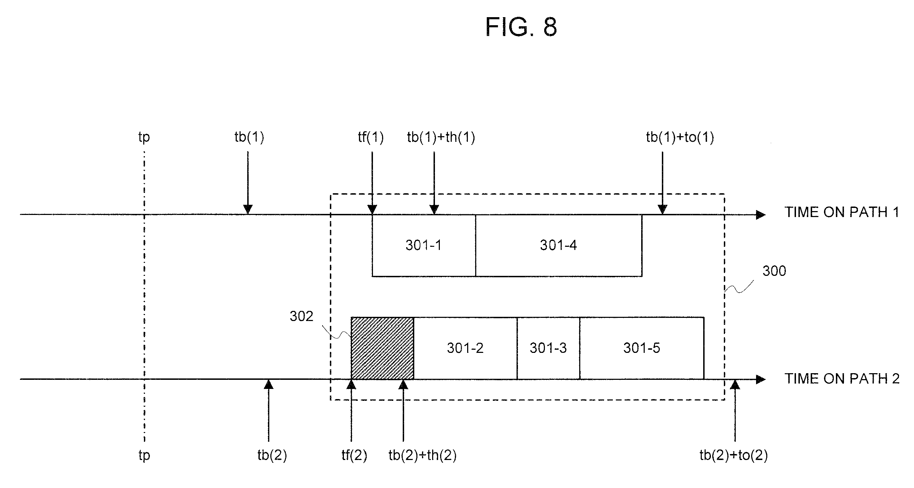

The PAC scheduler scheme, which is described in the first embodiment as a second exemplary flow control algorithm, is extended in the second embodiment as follows: An operation of a case in which two paths are contained will be described with reference to FIG. 8. FIG. 8 shows two time number lines corresponding to two paths and a predicted arrival sequence of packets traveling along each path.

For an n-th path, tb, tf, th and to are represented as tb(n), tf(n), th(n) and to(n), meanings of which are similar to those as shown in FIG. 4, except that the packets shown are not arranged in an actual arrival sequence but in an arrival sequence predicted by the transmitting node. The transmitting node regards any path with tb(n)+th(n) < tf(n) as capable of transmitting a packet block. In FIG. 8, tb(1)+th(1) < tf(1), which means the path is capable of immediate transmission.

The scheduling section 202 calculates a predicted arrival time of the leader packet 302 for each path, and constructs a packet block so that the leader packet 302 is transmitted via a path that is predicted to cause the leader packet 302 to arrive earliest. In FIG. 8, the transmission path for the leader packet selected is Path 2.

Next, the data size of the first packet 301-1 in the buffer section 201 is acquired, and the packet 301-1 is disposed to a path that is predicted to cause the packet 301-1 to arrive earliest when it is transmitted along with the leader packet. In FIG. 8, the first data packet 301-1 is disposed to Path 1. Thereafter, packets are added in the block one by one and are similarly disposed, and the configuration of the packet block is completed when the maximum number of packets to be transmitted is determined such that the sum of the packet size to be transmitted for each path is equal to or less than tb(n)+to(n).

In FIG. 8, a packet block 300 containing five data packets 301-1 - 301-5 is constructed in Paths 1 and 2 together.

In the extended window control and PAC scheduling as described above, a leader packet is transmitted via a path that is predicted to have the lowest delay, whereby notification of the flow control information on the path having a greater delay can be achieved with a delay equivalent to that in the path with the lowest delay.

The time taken from packet reception at the receiving node to notification of flow control information generated based on the condition of the reception to the transmitting node, however, includes not only a transmission delay of flow control information, but also a wait time from packet reception to flow control information transmission. Since the wait time is equal to a block transmission interval at maximum, if the amount of data assigned to each path per block is increased for the purpose of reduction in node processing load, precision of path band estimation in the packet train scheme, or keeping of a certain level or higher of the amount of data to be buffered in a path for efficient use of the band, the flow control information feedback delay is increased.

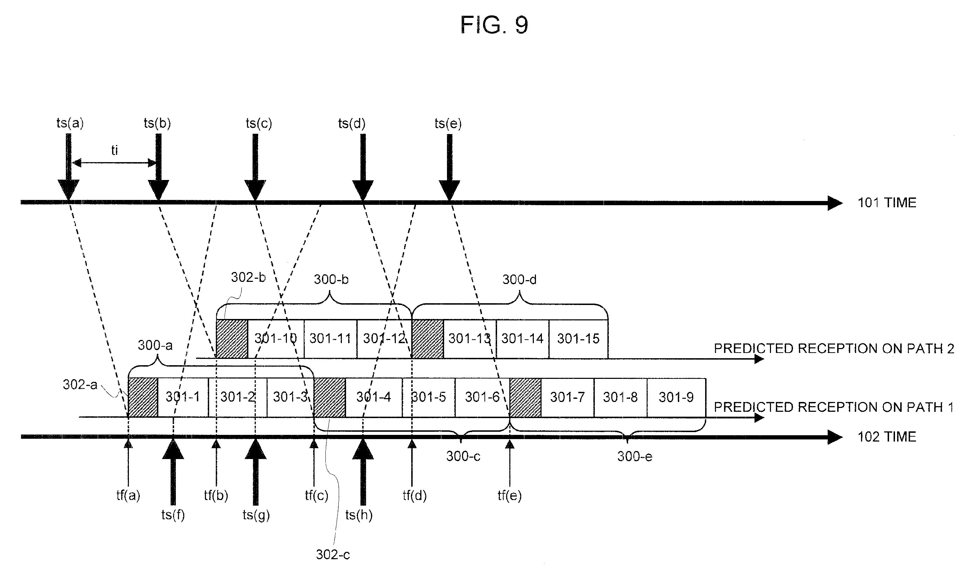

Then, a third flow control algorithm will now be described hereinbelow with reference to FIG. 9, which algorithm is for, when a plurality of paths with equivalent delay are present, reducing the wait time until transmission of flow control information while keeping a certain level or higher of the amount of data per block for each path.

In FIG. 9, a number line designated as "101 Time" represents a time at the transferring node 101, and a number line designated as "102 Time" represents a time at the transferring node 102, similarly to FIG. 4. However, it is assumed that two paths, Path 1 and Path 2, are present between the transferring node 101 and transferring node 102, and the reception sequence predicted by the transferring node 101 for the packets traveling along the paths received at the transferring node 102 are indicated on a line designated as "predicted reception on Path 1" and a line designated as "Predicted reception on Path 2."

Each packet block is basically configured with a single path. The block size of a packet block for each path is determined so that the transmission delay of packets in the block is constant, that is, [(the total packet size in a block) / (path speed)] is the same for all blocks on either path. In such a condition, each packet block is transmitted with a shift of a block transmission cycle 'ti' defined by [(transmission delay for the packets in the block) / (the number of paths available for signaling)], which becomes a cycle of transmission of the leader packet.

Then, as shown in FIG. 9, a packet block that uses Path 1 and a packet block that uses Path 2 alternately arrive. By thus scheduling packet block transmission, the transmission interval (feedback cycle) for the leader packet can be reduced as compared with the length of the packet train for use in estimation of the speed.

This is because, whereas the interval of arrival of the leader packet is generally equal to the length of the packet train when a packet block is transmitted using only one path as in the first embodiment, arrival of the leader packet can be received at intervals of 'ti' that is shorter than the length of the packet train when a packet block is transmitted using a plurality of paths as shown in FIG. 9.

In a case that the path condition is variable, periodical arrival of the report is not always secured, unlike that shown in FIG. 9. For example, the speed of Path 1 that is lowered between time tf(a) and time tf(c) causes the leader packet 302-c to arrive later than tf(c). In such a case, the node 101 detects speed variation by information on the leader packet transmitted by the node 102 at ts(f) or ts(g), and adjusts the amount of data in the packet bock 300-d transmitted at ts(d) such that a time taken in reception from the head to the tail at the node 102 (time for completion of reception) is of the order of 'ti' or shorter. The packet block to be transmitted next to 300-d is also transmitted via Path 2 in such a size that the time for completion of reception is of the order of 'ti' or shorter. Thereafter, until Path 1 turns to a transmittable condition, i.e., until tb+th < tf stands, the packet block is transmitted exclusively via Path 2 in such a size that the time for completion of reception is of the order of 'ti' or shorter. Thus, even in a condition that a delay of Path 1 becomes larger due to variation in the path condition, the transmission/reception cycle for the leader packet can be kept at a value of the order of 'ti' or shorter.

On the contrary, the speed of Path 1 is increased between time tf(a) and time tf(c), for example, the leader packet 302-c arrives earlier than tf(c). In such a case, the node 101 detects a change in speed between ts(c) and ts(d), and adds packets traveling along Path 1 to the packet block 300-d that is to be transmitted at ts(d) by an amount of data that can arrive in a period of time up to a scheduled arrival time tf(e) of a next leader packet traveling along Path 1. At that time, the packet block 300-d contains packets of both Paths 1 and 2. For packet block transmission of 300-e or later, the block size is determined again so that a transmission delay for the new speed is within 'ti' multiplied by the number of available paths. At that time, the interval of arrival of the leader packet is kept within 'ti' similarly to that before the change of the speed. On the other hand, since the proportion of the amount of data of the leader packet with respect to the packet block is reduced, band usage efficiency is improved.

According to the second embodiment described above, it is possible to achieve load distribution among paths taking account of the result of monitoring of the delay and speed of the communication paths.

Since the present invention achieves determination of the transmission time and the transmission path at the transmitter side on a packet-block-by-packet-block basis, rather than on a packet-by-packet basis or on a packet-pair-by-packet-pair basis as in conventional techniques, a larger amount of data in a packet block allows reduction of a load on transmission processing in the transferring node.

Moreover, since signaling information is compiled into a leader packet, extraction of flow control information on a receiver side and update of scheduling information are both performed at a frequency of packet block transmission, unlike conventional techniques in which they are performed at the same frequency as packet transmission, a load on reception processing in the transferring nodes is reduced.

Furthermore, by transmitting the leader packet in which signaling information is compiled as the head of a packet block via a path that allows earliest arrival, there is achieved an effect that state information on a path with greater delay can be fed back in a shorter period of time as compared with feedback made using the path with greater delay itself. In addition, since signaling information is omitted from data packets, when the number of packets in a packet block for each path is greater than a certain value, there is achieved an effect that the total packet size is accordingly reduced as compared with conventional techniques for the same amount of data.

Moreover, high-precision path band estimation in the packet train scheme is achieved using a dedicated probe packet and the like, as in the second embodiment, without degrading band usage efficiency.

The preceding description has been principally made on an operation in a condition of a large amount of data to be transferred and with a high load. In a condition with a lower load, it is necessary to monitor the condition of a line by periodically transmitting a dummy packet, for example, because no data to be transmitted is present in the buffer section.

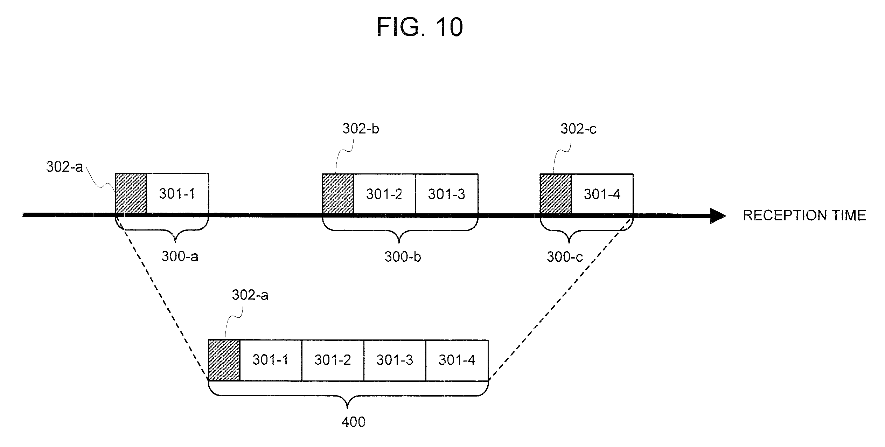

At that time, the number of packets contained in a single packet block is smaller, and therefore, precision of estimation of the speed is deficient as compared with the case with high load. Even in such a case, packets contained in consecutive packet blocks are considered to be joined, whereby precision of estimation of the speed can be kept at a certain level or higher. This operation will now be described referring to FIG. 10. In FIG. 10, packets that belong to three packet blocks 300-a, 300-b, 300-c are received via a certain path, and there exists a period of time in which no data is received between the tail of the preceding packet block and the head of the next packet block.

In such a case, estimation of the reception speed is conducted assuming that data packets 301-2, 301-3 contained in the packet block 300-b are received immediately after the data packet 301-1. Likewise, it is assumed that a data packet 301-4 contained in the packet block 300-c is received immediately after the data packet 301-3. Then, a virtual packet block such as a packet block 400 is constructed. At that time, a time required to receive the data packets 301-2, 301-3 is defined using the difference in reception time between the packets 302-b and 301-3 measured in receiving the packet block 300-b, and a time required to receive the data packet 301-4 is defined using the difference in reception time between the packets 302-c and 301-4 measured in receiving the packet block 300-c. The time required to receive data packets in the virtual packet block 400 is defined as the sum of the times required to receive the data packets measured in receiving 300-a, 300-b, and 300-c. The reception speed is estimated as a value obtained by dividing the sum of the amount of data of four data packets 301-1 - 301-4 by the time required to receive the data packets in the virtual packet block 400.

By conducting estimation of the speed using the virtual packet block 400 consisting of five packets, including the leader packet, an effect of improved measurement precision can be expected as compared with the packet blocks 300-a, 300-b, 300-c in which the number of constituent packets is smaller.

### (Third Embodiment)

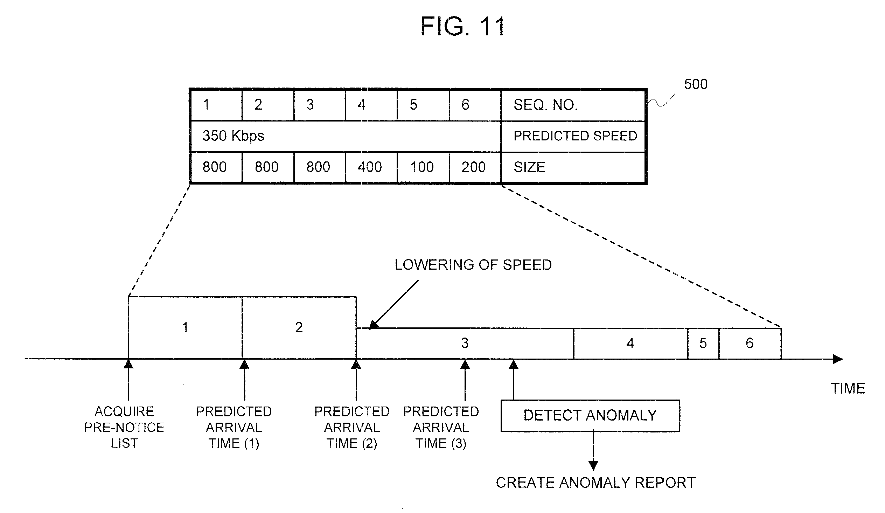

In the following description, an embodiment that implements a new function by information contained as block management information in a leader packet will be described. FIG. 11 shows an overview of an operation in a third embodiment of the present invention that enables early detection of communication anomaly by incorporating the speed of each link predicted by a transmitting node and the size of data in a block into block management information 500.

FIG. 11 shows a case of a packet block containing packets from a sequence number of 1 to 6 for a certain path, where block management information transmitted in accordance with the third embodiment when the speed of the link is estimated as 350 kbps, and a relationship in the data packet reception time at the receiving node are shown. In FIG. 11, a time number line in the lower portion indicates an actual packet arrival sequence at the receiving node.

The receiving node performs nothing on packets until packet 2 because they are delivered at a speed as predicted by the transmitting node; however, lengthening of the interval of arrival is detected at the packet 3, and the receiving node thus knows that the speed predicted by the transmitter is deviated from an actual transfer speed. Once the deviation has been decided to exceed a certain level, an anomaly report is created and sent back, whereby a period of time in which the transmitting node misidentify the link status can be minimized, thus improving followability of the flow control operation.

### (Fourth Embodiment)

Next, a fourth embodiment that enables early detection of packet loss on a user-flow-by-user-flow basis will be described.

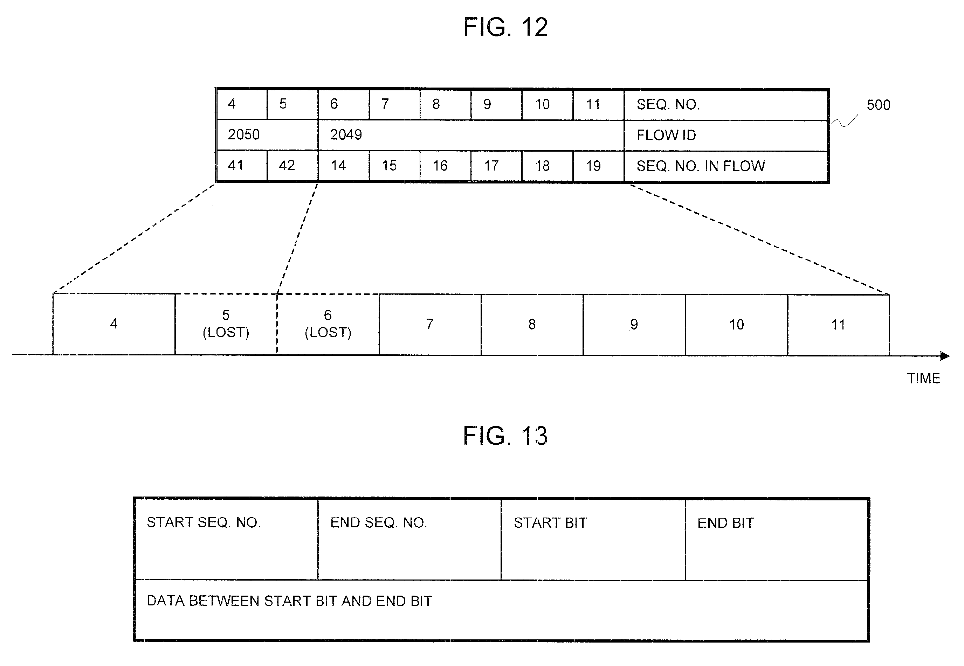

FIG. 12 shows an example of block management information and data packet reception sequence at a receiving node in accordance with a fourth embodiment of the present invention. The block management information 500 contains therein user flow information on each packet in a block. As used herein, the term "user flow" refers to an end-host-to-end-host packet transfer session for which the packet arrival sequence is to be saved, and each user flow is assigned with a unique ID.

Moreover, it is assumed that each packet in a user flow is assigned another unique sequence number in that user flow, independent of the sequence number for the path. In FIG. 12, in a transmitting node, a packet block containing packets with the sequence number of 4 - 11 in a certain path contains two user flows numbered 2049 and 2050. In FIG. 12, a time number line in the lower portion indicates an actual packet arrival sequence at the receiving node.

In the example shown in FIG. 12, while the transmission results in lost packets 5 and 6, reception of the packet 7 enables detection of the loss. Moreover, since flow management information 500 indicates that the lost packets 5 and 6 are #14 in a flow 2049 and #41 in a flow 2050, respectively, packets belonging to the two flows that have arrived thus far are transferred without waiting for arrival of the lost packets.

A conventional technique in which independent sequence numbers are assigned separately on a path-by-path basis and on a user-flow-by-user-flow basis is disclosed in Non-patent Document 8; in such a conventional technique, however, user flow information on the lost packet is not provided, and hence, it is not possible to decide whether a packet in a specific user flow delivered out of sequence is caused by packet loss or by sequence reversion due to passing-through of an inverse multiplexing link. Thus, even if this is caused by packet loss, transfer must be suspended over a certain period of time assuming possibility of sequence reversion. Since the present embodiment allows the receiving node to know a sequence number of a lost packet in a user flow, packet loss can be assuredly detected without confusion with sequence reversion. Therefore, transfer suspension can be omitted in detecting packet loss, thus achieving an effect of reduction of jittering in an end-host-to-end-host session.

### (Fifth Embodiment)

Next, an overview of an operation in accordance with a fifth embodiment of the present invention will be described hereinbelow, where data compression is enabled by incorporating information on a portion common to data of data packets in a block, as shown in FIG. 13, into block management information. The data packets to be compressed here are configured to include a common portion in their data region. In FIG. 13, a start sequence number and end sequence number represent a range of packets to be subjected to data compression.

Start bit and end bit indicate a range of the common data region of the packets to be compressed by the start bit position and end bit position. "Data between start bit and end bit" contains common data from the start bit to the end bit. Such compression information is contained in the block management information while deleting common data specified there from the data field in data packets, thereby reducing the total size of transmitted packets.

Such data compression as described above is particularly effective when data itself contains a header according to another protocol, and has a large size of a common portion. When a plurality of common portions are present in a combination of different packets or bit ranges, a plurality of sets of compression information as shown in FIG. 13 may be incorporated into the block management information. The transmitted data compression according to the present embodiment can be more easily controlled than the conventional data compression method that requires signaling for sharing the compression status between transmitting and receiving nodes.

It should be noted that the aforementioned control information may be routing information.

The nodes 101, 102, etc. according to the present invention can implement their operation in hardware as a matter of course, and in addition, they can implement their operation in software by a computer executing programs implementing the functions in several sections. The program may be kept in a magnetic disk, a semiconductor storage device, and other recording media, from which the program is loaded into a computer to control its operation, thereby achieving the aforementioned functions.

## Claims

1. A communication method **characterized in that** the method comprises:
grouping a plurality of data packets and a leader packet together in one block; and
compiling control information on said plurality of data packets into said leader packet and transmitting said leader packet, and controlling transmission of the packets based on said control information in said received leader packet.

2. A communication method according to claim 1, **characterized in that** said control information is flow control information.

3. A communication method according to claim 1, **characterized in that** said control information is retransmission control information.

4. A communication method according to claim 1, **characterized in that** said control information is routing information.

5. A communication method according to claim 1, **characterized in that** said control information is path information.

6. A communication method according to claim 1, **characterized in that** said control information is control information common to said data packets.

7. A communication method according to claim 1, **characterized in that** the method comprises incorporating identification information that uniquely identifies the leader packet into said data packets.

8. A communication method according to claim 1, **characterized in that** the method comprises incorporating identification information that uniquely identifies a data packet whose control information is compiled, into said leader packet.

9. A communication method according to claim 1, **characterized in that** said plurality of data packets or leader packet is transmitted/received via a plurality of lines.

10. A communication method according to claim 9, **characterized in that** said leader packet is transmitted using the fastest one of said plurality of lines.

11. A communication method according to claim 9, **characterized in that** a line for transmitting said leader packet or said data packets is selected based on said control information.

12. A communication method according to claim 1, **characterized in that** an amount of data in a block to be transmitted is determined based on the received control information contained in the leader packet.

13. A communication method according to claim 1, **characterized in that** a transmission time for a block to be transmitted is determined based on the received control information contained in the leader packet.

14. A communication method according to claim 1, **characterized in that** the speed of a communication path is estimated from reception times of a plurality of data packets belonging to the same block.

15. A communication system **characterized in that** the system comprises:
packet block creating means for grouping a plurality of data packets and a leader packet together in one block, and compiling control information on said plurality of data packets into said leader packet; and
scheduling means for controlling transmission of the packets based on the received control information compiled in the leader packet.

16. A communication system according to claim 15, **characterized in that** said control information is flow control information.

17. A communication system according to claim 15, **characterized in that** said control information is retransmission control information.

18. A communication system according to claim 15, **characterized in that** said control information is routing information.

19. A communication system according to claim 15, **characterized in that** said control information is path information.

20. A communication system according to claim 15, **characterized in that** said packet block creating means compiles control information common to said data packets into said leader packet.

21. A communication system according to claim 15, **characterized in that** identification information that uniquely identifies the leader packet is incorporated into said data packets.

22. A communication system according to claim 15, **characterized in that** identification information that uniquely identifies a data packet whose control information is compiled is incorporated into said leader packet.

23. A communication system according to claim 15, **characterized in that** the system comprises transmitting means for transmitting said plurality of data packets or leader packet via a plurality of lines.

24. A communication system according to claim 23, **characterized in that** said scheduling means makes control to transmit the leader packet using the fastest one of said plurality of lines.

25. A communication system according to claim 23, **characterized in that** said scheduling means selects a line for transmitting said leader packet or said data packets based on the control information.

26. A communication system according to claim 15, **characterized in that** said scheduling means determines an amount of data in a block to be transmitted based on the received control information contained in the leader packet.

27. A communication system according to claim 15, **characterized in that** said scheduling means determines a transmission time for a block to be transmitted based on the received control information contained in the leader packet.

28. A communication system according to claim 15, **characterized in that** the system comprises a packet analyzing section for estimating the speed of a communication path from reception times of a plurality of data packets belonging to the same block.

29. A node **characterized in that** the node comprises:
packet block creating means for grouping a plurality of data packets and a leader packet together in one block, and compiling control information on said plurality of data packets into said leader packet; and
scheduling means for controlling transmission of the packets based on the control information compiled in the leader packet, which is received from other node.

30. A communication node according to claim 29, **characterized in that** said packet block creating means compiles control information common to said data packets together into said leader packet.

31. A node according to claim 29, **characterized in that** identification information that uniquely identifies the leader packet is incorporated into said data packets.

32. A node according to claim 29, **characterized in that** identification information that uniquely identifies a data packet whose control information is compiled is incorporated into said leader packet.

33. A node according to claim 29, **characterized in that** the node comprises transmitting means for transmitting said plurality of data packets or leader packet via a plurality of lines.

34. A node according to claim 33, **characterized in that** said scheduling means makes control to transmit the leader packet using the fastest one of said plurality of lines.

35. A node according to claim 33, **characterized in that** said scheduling means selects a line for transmitting said leader packet or said data packets based on the control information compiled in the leader packet, which is received from other node.

36. A node according to claim 29, **characterized in that** said scheduling means determines an amount of data in a block to be transmitted based on the control information contained in the leader packet, which is received from other node.

37. A node according to claim 29, **characterized in that** said scheduling means determines a transmission time for a block to be transmitted based on the control information contained in the leader packet, which is received from other node.

38. A node according to claim 29, **characterized in that** the node comprises a packet analyzing section for estimating the speed of a communication path from reception times of a plurality of data packets belonging to the same block.

39. A program **characterized in** causing a computer to execute:
packet block creating processing for grouping a plurality of data packets and a leader packet together in one block, and compiling control information on said plurality of data packets into said leader packet; and
scheduling processing for controlling transmission of the packets based on the control information compiled in the leader packet, which is received from other node.
